(19) Europäisches Patentamt
European Patent Office
Office européen des brevets

(11) **EP 2 602 028 B1**

(12) **FASCICULE DE BREVET EUROPEEN**

(45) Date de publication et mention
de la délivrance du brevet:
**19.02.2014 Bulletin 2014/08**

(51) Int Cl.:
***B06B 1/02*** *(2006.01)*

(21) Numéro de dépôt: **12306532.8**

(22) Date de dépôt: **06.12.2012**

(54) **Dispositif électronique et système de commande d'applications mettant en oeuvre au moins un transducteur piézoélectronique, électrostrictif ou magnétostrictif**

Elektronische Vorrichtung und Steuersystem für Anwendungen, bei dem mindestens ein piezoelektronischer, elektrostriktiver oder magnetostriktiver Wandler zum Einsatz kommt

Electronic device and system for controlling applications using at least one piezoelectronic, electrostrictive or magnetostrictive transducer

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2011 FR 1161371**

(43) Date de publication de la demande:
**12.06.2013 Bulletin 2013/24**

(73) Titulaire: **Sinaptec**
**59260 Lezennes (FR)**

(72) Inventeur: **Tierce, Pascal**
**59242 Genech (FR)**

(74) Mandataire: **Matkowska, Franck**
**Matkowska & Associés**
**9, rue Jacques Prévert**
**F-59650 Villeneuve d'Ascq (FR)**

(56) Documents cités:
**US-A1- 2007 163 349    US-B1- 6 437 480
US-B1- 6 469 957    US-B1- 7 476 233**

## Description

### Domaine technique

La présente invention concerne le domaine de la commande, au moyen d'un générateur électrique de puissance, d'applications mettant en oeuvre au moins un transducteur piézoélectrique, électrostrictif ou magnétostrictif, et en particulier, mais pas exclusivement un transducteur ultrasonore.

### Art antérieur

Il existe de nombreuses applications industrielles mettant en oeuvre au moins un transducteur (également désigné actionneur) piézoélectrique, électrostrictif ou magnétostrictif, qui permet de commander à l'aide d'un champ électrique ou magnétique un mouvement mécanique, tel qu'une vibration mécanique, un déplacement ou un choc mécanique.

Plus particulièrement, dans le cas particulier de la génération de vibrations mécaniques, les ondes mécaniques vibratoires, et notamment les ondes ultrasonores, sont utilisées dans très nombreux domaines industriels, tels que par exemple, et de manière non limitative et non exhaustive, le nettoyage, la découpe, le soudage, etc...

Quel que soit le type d'application, on utilise au moins un transducteur piézoélectrique, électrostrictif ou magnétostrictif, qui est alimenté par un générateur électrique de puissance, et qui permet de transformer l'énergie électrique fournie par le générateur en un mouvement mécanique.

Dans le cas particulier d'un mouvement vibratoire, l'énergie électrique fournie par le générateur est transformée en un mouvement mécanique vibratoire dans une plage de fréquences et d'amplitudes qui dépendent notamment de l'application. De nombreuses applications industrielles mettant en oeuvre un mouvement mécanique vibratoire commandé par un transducteur fonctionnent dans le domaine ultrasonore (fréquences typiquement supérieures à 20kHz). Mais certaines applications peuvent également mettre en oeuvre un transducteur fonctionnant à des fréquences inférieures à 20kHz.

Plus particulièrement, dans le domaine vibratoire, le générateur électrique de puissance délivre un signal de puissance, dont la fréquence et la tension peuvent par exemple être adaptées à la fréquence de résonance ou d'antirésonance du transducteur en fonctionnement dans son environnement. Le plus souvent ce signal de puissance délivré par le générateur est réglable (par exemple en fréquence et/ou en amplitude). Egalement, dans certaines réalisations connues, ce signal de puissance délivré par le générateur est asservi à partir de consignes extérieures et d'informations (par exemple courant et tension) mesurées sur le transducteur.

Pendant de nombreuses années, la partie commande a été réalisée de manière analogique, ce qui imposait des réglages complexes et rendait les dispositifs de commande figés et difficilement adaptables. Un exemple de commande d'un transducteur ultrasonore avec asservissement analogique est décrit par exemple dans le brevet américain US 5 406 503.

Plus récemment, l'utilisation de solutions à base de commandes numériques a permis d'intégrer des fonctionnalités nouvelles dans le contrôle du fonctionnement du transducteur. Des exemples de commande d'un transducteur ultrasonore avec asservissement numérique sont décrits par exemple dans les publications suivantes : demandes de brevet européen EP-A-1 835 622, EP-A-1 216 760, EP-A 1 199 047 et EP-A-1 588 671.

Il est remarquable de constater que les dispositifs décrits restent assez figés dans leur mode de réalisation et sont le plus souvent spécifiques d'une application donnée, c'est-à-dire d'un type donné de transducteur piézoélectrique, électrostrictif ou magnétostrictif.

### Objectif de l'invention

Un objectif de l'invention est de proposer une nouvelle solution technique pour la commande, au moyen d'un générateur électrique de puissance adapté, d'applications mettant en oeuvre au moins un transducteur piézoélectrique, électrostrictif ou magnétostrictif, laquelle solution présente l'avantage d'être universelle, c'est-à-dire non spécifique à une seule application, et d'être très flexible et facilement adaptable à des applications dans des domaines techniques différents et à des transducteurs piézoélectriques électrostrictif ou magnétostrictif ayant des structures et des propriétés mécaniques différentes. Un autre objectif de l'invention est de proposer une solution de commande d'un transducteur piézoélectrique, électrostrictif ou magnétostrictif qui est facilement évolutive, et qui peut facilement et rapidement être configurée ou modifiée.

### Résumé de l'invention

L'invention a ainsi pour objet un dispositif électronique de commande d'applications mettant en oeuvre au moins un transducteur piézoélectrique, électrostrictif, ou magnétostrictif, ledit dispositif comportant un générateur électrique de puissance adapté pour alimenter au moins un transducteur piézoélectrique, électrostrictif, ou magnétostrictif, avec un signal de commande, des moyens électroniques de commande aptes à commander automatiquement le générateur électrique de puissance en utilisant une macro-fonction de commande (M), et une mémoire électronique dans laquelle sont stockées :

- une première famille (A) de fonctions de commande comportant une ou plusieurs fonctions de commande élémentaires différentes (An), chaque fonction de commande élémentaire de la première famille (A) permettant d'ajuster l'amplitude du signal de commande,
- une deuxième famille (T) de fonctions de commande comportant une ou plusieurs fonctions de commande élémentaires différentes (Tn), chaque fonction de commande élémentaire de la deuxième famille (T) permettant d'ajuster la durée du signal de commande, - une troisième famille (C) de fonctions de commande comportant plusieurs fonctions de commande élémentaires différentes (Cn), chaque fonction de commande élémentaire de la troisième famille (C) permettant d'ajuster le cycle du signal de commande,
- au moins ladite macro-fonction de commande (M), qui est constituée par l'assemblage d'au moins trois fonctions de commande élémentaires choisies respectivement parmi les trois familles de fonctions de commande (A, T, C) enregistrées en mémoire.

Plus particulièrement, mais de manière facultative selon l'invention, le dispositif électronique de l'invention peut comporter les caractéristiques techniques additionnelles et optionnelles ci-après, prises isolément ou en combinaison :

- la mémoire électronique contient une quatrième famille (F) de fonctions de commande comportant une ou plusieurs fonctions de commande élémentaires différentes (Fn), chaque fonction de commande élémentaire de la première famille (F) permettant d'ajuster la fréquence du signal de commande, et ladite macro-fonction de commande (M) est constituée par l'assemblage d'au moins quatre fonctions de commande élémentaires choisies respectivement parmi les quatre familles de fonctions de commande (A, T, C, F) enregistrées en mémoire.
- au moins une fonction de commande élémentaire de ladite macro-fonction de commande (M) permet d'ajuster l'amplitude ou la durée ou le cycle ou la fréquence du signal de commande en fonction d'au moins une valeur de réglage qui est stockée dans la mémoire électronique.
- la mémoire électronique contient plusieurs macro-fonctions de commande (Mn) différentes, qui sont chacune constituées par l'assemblage d'au moins trois fonctions de commande élémentaires choisies respectivement parmi les premières, deuxième et troisième familles de fonctions de commande (A, T, C) enregistrées en mémoire, et de préférence par l'assemblage d'au moins quatre fonctions de commande élémentaires choisies respectivement parmi les premières, deuxième, troisième, et quatrième familles de fonctions de commande (A, T, C, F) enregistrées en mémoire.
- la mémoire électronique contient la ou les valeurs de réglage des fonctions de commande élémentaire d'une seule macro-fonction de commande (M).
- la mémoire électronique contient la ou les valeurs de réglage des fonctions de commande élémentaire prédéfinies de chaque macro-fonction de commande enregistrée dans la mémoire électronique.
- Le dispositif comporte au moins un port de communication permettant de faire communiquer le dispositif avec une unité de traitement électronique programmable, de type microordinateur ou automate programmable.

L'invention a également pour objet un système de commande d'applications mettant en oeuvre au moins un transducteur piézoélectrique, électrostrictif, ou magnétostrictif, ledit système comportant un dispositif électronique susvisé, et une unité de traitement électronique, qui est connectable audit dispositif électronique.

Plus particulièrement, mais de manière facultative selon l'invention, le système de l'invention peut comporter les caractéristiques techniques additionnelles et optionnelles ci-après, prises isolément ou en combinaison :

- l'unité de traitement électronique permet, lorsqu'elle est connectée au dispositif électronique, de charger en mémoire du dispositif électronique au moins une macro-fonction de commande (M).
- l'unité de traitement électronique permet, lorsqu'elle est connectée au dispositif électronique, de charger en mémoire du dispositif électronique les fonctions élémentaires de chacune des familles de fonction ((A, F, T) ou (A, F, T, C)).
- l'unité de traitement électronique permet, lorsqu'elle est connectée au dispositif électronique, de charger en mémoire du dispositif électronique la ou les valeurs de réglage d'au moins une macro-fonction de commande (M).
- l'unité de traitement électronique, lorsqu'elle est connectée au dispositif électronique, permet à un utilisateur de sélectionner une macro-fonction de commande parmi un ensemble de macro-fonctions de commande (Mn) enregistrées dans la mémoire du dispositif, le générateur électrique de puissance du dispositif étant conçu pour exécuter ladite macro-fonction de commande qui a été sélectionnée.

- l'unité de traitement électronique comporte en mémoire au moins toutes les fonctions élémentaires de commande enregistrées dans le dispositif électronique , et un programme de construction de macro-fonctions qui, lorsqu'il est exécuté par l'unité de traitement électronique, permet à un utilisateur de construire une macro-fonction de commande (M) à partir desdites fonctions de commande élémentaires.

L'invention a pour autre objet un programme informatique comprenant un moyen de code de programme informatique apte à être exécuté par des moyens électroniques de traitement (3), et permettant, lorsqu'il est exécuté par des moyens électroniques de traitement (3), la construction de macro-fonctions de commande (M) à partir d'une première famille (A) de fonctions de commande comportant une ou plusieurs fonctions de commande élémentaires différentes (An), qui permettent chacune d'ajuster l'amplitude d'un signal de commande qui doit être généré par un générateur électrique de puissance, d'une deuxième famille (T) de fonctions de commande comportant une ou plusieurs fonctions de commande élémentaires différentes (Tn), qui permettent chacune d'ajuster la durée dudit signal de commande, et d'une troisième famille (C) de fonctions de commande comportant plusieurs fonctions de commande élémentaires différentes (Cn), qui permettent chacune d'ajuster le cycle dudit signal de commande.

Plus particulièrement, mas non obligatoirement, le programme informatique permet la construction de macro-fonctions de commande (M) à partir également d'une quatrième famille (F) de fonctions de commande comportant une ou plusieurs fonctions de commande élémentaires différentes (Fn), qui permettent chacune d'ajuster la fréquence dudit signal de commande.

L'invention a également pour objet un programme informatique, comprenant un moyen de code de programme informatique apte à être exécuté par des moyens électroniques de traitement, et permettant, lorsqu'il est exécuté par des moyens électroniques de traitement, le paramétrage d'une macro-fonction de commande (M), laquelle macro-fonction de commande (M) comprend une première fonction de commande élémentaire (An), qui permet d'ajuster, de préférence en fonction d'au moins une valeur de réglage, l'amplitude d'un signal de commande qui doit être généré par un générateur électrique de puissance, d'une deuxième fonction de commande élémentaire (Tn), qui permet d'ajuster la durée dudit signal de commande (S), de préférence en fonction d'au moins une valeur de réglage, et une troisième fonction de commande élémentaire (Cn), qui permet d'ajuster le cycle du signal de commande (S), de préférence en fonction d'au moins une valeur de réglage, ledit programme permettant à un utilisateur de définir la ou les valeurs de réglage de la ou des fonctions élémentaires de commande.

Plus particulièrement, mais non obligatoirement, ledit programme informatique de paramétrage permet le paramétrage d'une macro-fonction de commande (M) comprenant également une quatrième fonction de commande élémentaire (Fn), qui permet d'ajuster la fréquence dudit signal de commande, de préférence en fonction d'au moins une valeur de réglage.

L'invention a également pour objet un support pouvant être lu par un ordinateur et sur lequel est enregistré un programme informatique susvisé.

## Brève description des figures

D'autres caractéristiques et avantages de l'invention apparaîtront plus clairement à la lecture de la description détaillée ci-après de plusieurs variantes de réalisation de l'invention, lesquelles variantes sont décrites à titre d'exemples non limitatifs et non exhaustifs de l'invention et en référence aux dessins annexés sur lesquels :

- la figure 1 est un schéma bloc représentant l'architecture d'un système de commande de l'invention ;
- les figures 2 à 5 sont des graphes illustrant des exemples de réalisation respectivement des fonctions élémentaires de commande F2, F3, A2, C2 ;
- la figure 6 illustre un exemple d'implémentation d'une macro-fonction de commande.

## Description détaillée

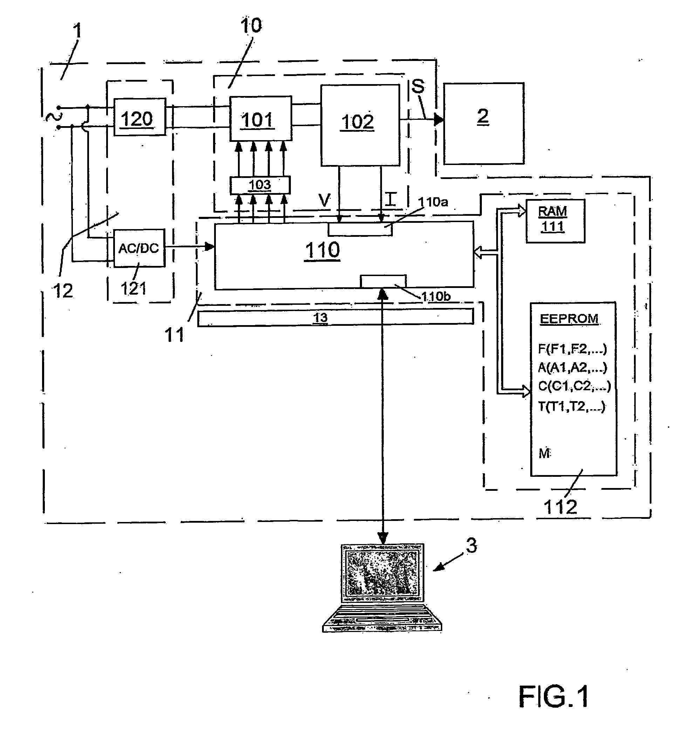

On a représenté sur la figure 1 un exemple particulier d'architecture électronique d'un dispositif électronique 1 qui est conforme à l'invention, et qui permet de commander une charge 2 comportant au moins un transducteur (ou actionneur) qui selon le cas peut être de type piézoélectrique, électrostrictif, ou magnétostrictif.

On désigne dans le présent texte par « transducteur piézoélectrique ou électrostrictif », tout dispositif permettant d'une manière générale de transformer une énergie électrique en une énergie mécanique par déformation d'un matériau. On désigne dans le présent texte par « transducteur magnétostrictif », tout dispositif permettant d'une manière générale de transformer une énergie électromagnétique en une énergie mécanique par déformation d'un matériau.

La charge 2 et le ou les transducteurs piézoélectriques, électrostrictifs, ou magnétostrictifs associés dépendent de l'application et peuvent être très variés.

Exemples d'applications

Le dispositif électronique 1 peut être adapté et paramétré pour commander l'une ou l'autre des charges 2 suivantes, dont la liste est donnée ci-après à titre uniquement d'exemples d'applications de l'invention et de manière non limitative et non exhaustive de l'invention.

Nettoyage :

Le dispositif électronique 1 est relié à un ou plusieurs transducteurs qui sont fixés sur la paroi externe d'une cuve elle-même remplie d'un liquide de nettoyage. L'énergie «électrique fournie par le dispositif électronique 1 est transformée par le ou les transducteurs en une énergie vibratoire qui induit un phénomène de cavitation dans le bain. Cette cavitation produit le nettoyage des pièces immergées.
Plusieurs dispositifs électroniques 1 peuvent être utilisés pour alimenter une cuve de nettoyage de grand volume. Dans ce cas, les générateurs des dispositifs électroniques 1 sont synchronisés ensemble.

Soudage- Découpe- Sonochimie

Le dispositif électronique 1 est relié à un transducteur. Ce transducteur est généralement équipé d'un booster et d'une sonotrode dont la géométrie de l'extrémité est déterminante de l'utilisation et de son application.

- Pour le soudage des matériaux, la forme de la sonotrode doit épouser la forme de la surface à souder,
- Pour la découpe, la sonotrode se présente sous la forme d'une lame vibrante,
- Pour la sonochimie, le mélange, la sonotrode est souvent de forme cylindrique mais pas exclusivement et elle est directement plongée dans le liquide à traiter...
- Pour la production d'aérosols, la surface extrême de la sonotrode permet de pulvériser le liquide qui entre en contact avec elle, cette surface peut être plate, incurvée...
- Pour le démoussage la surface extrême de la sonotrode permet de produire un champ acoustique très intense dans un gaz (>160dB),

Le dispositif électronique 1 est relié à un transducteur et il est réglé de sorte à maintenir sa fréquence de commande à la fréquence de fonctionnement qui est souvent la fréquence de résonance ou d'antirésonance du transducteur et de la sonotrode associée. L'énergie transmise au transducteur est convertie en une énergie vibratoire qui induit le phénomène recherché :

1. Pour le soudage, un échauffement,
2. Pour la découpe un tranchage du matériau,
3. Pour la sonochimie un phénomène très violent de cavitation,
4. Pour la production d'aérosols une dispersion du liquide en gouttelettes,
5. Pour le démoussage un champ acoustique suffisamment intense pour casser des bulles de mousse lors du remplissage de liquides dans des bouteilles...

Commande d'actionneur(s)

Le dispositif électronique 1 est relié à un transducteur, qui remplit une fonction d'actionneur, et dont le mouvement est proportionnel à une tension délivrée par le dispositif électronique 1. Ce mouvement est par exemple déplacement statique si la tension délivrée est continue ; il est par exemple impulsionnel si la commande délivrée est une impulsion, ou par exemple d'une forme plus générale proportionnelle au signal produit par le dispositif électronique.
L'effet induit a pour objet de contrôler le déplacement d'un dispositif mécanique couplé à l'actionneur (transducteur), de produire une vibration très basse fréquence ou d'induire un choc de propulsion.

Commande de moteurs piézoélectriques/magnétostrictifs linéaires ou rotatifs

Pour réaliser un dispositif de déplacement linéaire, il est nécessaire de créer une onde progressive dans un dispositif de dimension finie. Le dispositif peut être une barre ou un anneau. La création d'une onde progressive est réalisée en superposant deux ondes stationnaires avec un déphasage de 90° dans le temps, et un déphasage de 90° dans l'espace. Pour réaliser un tel système, il est nécessaire de disposer d'au moins deux transducteurs ultrasonores correctement disposés sur la barre. Deux dispositifs électroniques 1 sont nécessaires pour parvenir à cette finalité. Le premier dispositif 1 alimente un transducteur avec une phase contrôlée, le second dispositif 1 alimente le second transducteur avec une phase décalée de 90° synchronisé sur le premier dispositif électronique. Un exemple de ce type d'application est décrit dans l'article : « A survey of Ultrasonic Waves in Powder Transportation », E. Murimi, J. Kihiu, G. Nyakoe and S. Mutuli

Le même principe est applicable pour réaliser un moteur électrique piézoélectrique rotatif.

Architecture du dispositif électronique de commande - Figure 1

En référence à la figure 1, le dispositif électronique 1 comporte un générateur électrique de puissance 10, qui en fonctionnement alimente la charge 2, avec un signal électrique de puissance S, désigné dans le présent texte par « signal de commande ».

Ce générateur électrique de puissance 10 est commandé automatiquement par une unité de traitement électronique programmable 11.

Le dispositif électronique 1 comporte également une alimentation électrique 12, qui comporte :

- un bloc de redressement et de filtrage 120 permettant l'alimentation du générateur électrique de puissance 10 en courant alternatif à partir du courant alternatif du secteur, et
- un bloc 121 de conversion du courant alternatif du secteur en courant continu pour l'alimentation en courant continu de l'unité de traitement électronique programmable 11.

L'architecture électronique du générateur électrique de puissance 10 est connue en soi, et comporte par exemple un pont en H 101 alimentant un réseau d'adaptation102, qui comporte par exemple un transformateur, et qui délivre le signal de commande précité S. Le pont en H est commandé par l'unité de traitement électronique programmable 11 de manière usuelle au moyen d'une électronique de pilotage 103 (« Driver »). Cette architecture électronique particulière du générateur électrique de puissance 10 n'est pas limitative de l'invention, et peut être remplacée par toute architecture électronique permettant de délivrer un signal de puissance (signal de commande S) qui est réglable.

L'unité de traitement électronique programmable 11 comporte un processeur numérique 110 associé à une mémoire vive 111 de type RAM et à une mémoire morte effaçable électriquement 112, de type EEPROM. Le processeur numérique 110 peut par exemple être un microprocesseur, un microcontrôleur ou un processeur spécialisé dans le traitement de signal de type DSP.

Dans l'exemple de réalisation la figure 1, mais de manière facultative selon l'invention, le processeur numérique 110 comporte un port d'entrée 110a qui est raccordé au réseau d'adaptation102, de manière à détecter en temps réel le courant I et la tension V du signal de commande S appliqué à la charge 2. Cette détection permet de réaliser dans certains cas une boucle d'asservissement du signal de commande S par rapport à une ou plusieurs consignes au moyen du processeur numérique 110.

Afin de pouvoir communiquer avec l'extérieur, le processeur numérique 110 comporte également au moins un port de communication 110b, qui peut par exemple être un port d'entrée/sortie série lent de type RS485 ou un port Ethernet.

Le port de communication 110b est utilisé notamment pour permettre à une unité de traitement électronique externe 3, telle que par exemple un automate ou un ordinateur, de dialoguer avec le processeur numérique 110, afin par exemple de permettre à l'unité de traitement électronique externe 3 de commander le processeur numérique 110, ou de charger ou à l'inverse de récupérer des données en mémoire morte 112 ou en mémoire vive 111.

L'échange des données avec l'extérieur sur le port de communication 110b est de préférence réalisée à travers une isolation galvanique 13 comportant par exemple de manière usuelle des opto-coupleurs.

Macro-fonction de commande - Fonctions de commande élémentaires

Le fonctionnement du dispositif électronique 1 repose avantageusement sur la mise en oeuvre d'une ou plusieurs macro-fonctions de commande, désignées également en raccourci dans le présent texte par « macros », qui sont chacune constituées de fonctions de commande élémentaires, et qui permettent le réglage automatique par le processeur 110 de la fréquence, de l'amplitude, de la durée et du cycle du signal de commande S.

On distingue quatre familles de fonctions de commande élémentaires :

Famille Fréquence (F) : Cette famille comporte l'ensemble des fonctions de commande élémentaires (F1, F2, F3...) propres à la fréquence du signal de commande S, et détaillées ultérieurement. Chaque fonction de commande élémentaire de cette famille (F) permet d'ajuster la fréquence du signal de commande, lorsqu'elle est exécutée automatiquement par le processeur 110.

Famille Amplitude (A) : Cette famille comporte l'ensemble des fonctions de commande élémentaires (A1, A2, A3, ...) propres à l'amplitude du signal de commande S, et détaillées ultérieurement. Chaque fonction de commande élémentaire de cette famille (A) permet d'ajuster l'amplitude du signal de commande, lorsqu'elle est exécutée automatiquement par le processeur 110.

Famille Temps (T) : Cette famille comporte l'ensemble des fonctions de commande élémentaires (T1, T2, T3, ...) propres aux notions de temps (durée) de la génération du signal de commande S, et détaillées ultérieurement. Chaque fonction de commande élémentaire de cette famille (T) permet d'ajuster la durée du signal de commande, lorsqu'elle est exécutée automatiquement par le processeur 110.

Famille Cycle (C) : Cette famille comporte l'ensemble des fonctions de commande élémentaires (C1, C2, C3,...) propres aux notions de cycle de la génération du signal de commande S et détaillées ultérieurement. Chaque fonction de commande élémentaire de cette famille (C) permet d'ajuster le cycle du signal de commande, lorsqu'elle est exécutée automatiquement par le processeur 110.

D'une manière générale, chaque fonction de commande élémentaire se caractérise par un ou plusieurs paramètres de réglages (ArgN), qui sont plus ou moins complexes, qui sont propres à chaque fonction élémentaire, et qui permettent la configuration de chaque fonction de commande élémentaire d'une macro-fonction de commande. Ces paramètres de réglage seront également désignés dans la suite du présent texte par les termes « arguments ». Pour le fonctionnement du dispositif électronique 1, chaque argument (ArgN) d'une fonction de commande élémentaire d'une macro-fonction M doit être renseigné avec une ou plusieurs valeurs de réglages spécifiques de cet argument.

Toutes les fonctions de commande élémentaires sont initialement stockées dans la mémoire morte 112 du dispositif 1.

Différents exemples de fonctions de commande élémentaires vont à présent être décrits à titre non limitatifs et non exhaustif de l'invention.

Exemples de fonctions de commande élémentaires de la famille

Fréquence (F)

F1 : Fréquence forcée

Une fréquence est imposée par l'utilisateur, et le générateur 10 applique cette fréquence sans boucle de réaction.

$$F1 = f(Fc)$$

| Argument | Description | Unité | Précision |
|---|---|---|---|
| Fc | Fréquence imposée au système par l'utilisateur | Hz | 2 |

F2 : Fréquence asservie en phase

Une fréquence de résonance optimale est déterminée dans la plage de fréquences autorisée. L'asservissement est réalisé au moyen d'une boucle de régulation en fonction du déphasage estimé entre la tension V et le courant I.

$$F2 = f(Phase, Finit, Ffinale, Tn)$$

| Argument | Description | Unité | Précision |
|---|---|---|---|
| Phase | Consigne de phase à suivre [-180° ; 180°] | Degré | 0,005 |
| Finit | Fréquence de démarrage de l'asservissement | Hz | 2 |
| Ffinale | Fréquence limite haute d'asservissement en fréquence | Hz | 2 |
| Tn | Nombre de mesures de phase utilisées dans le calcul de l'erreur (moyenne) | | 1 |

Prenons l'exemple de la fonction F2 suivante où l'on cherche à asservir la fréquence sur un zéro de phase :

$$F2 = f(0, 28000, 29000, Tn)$$

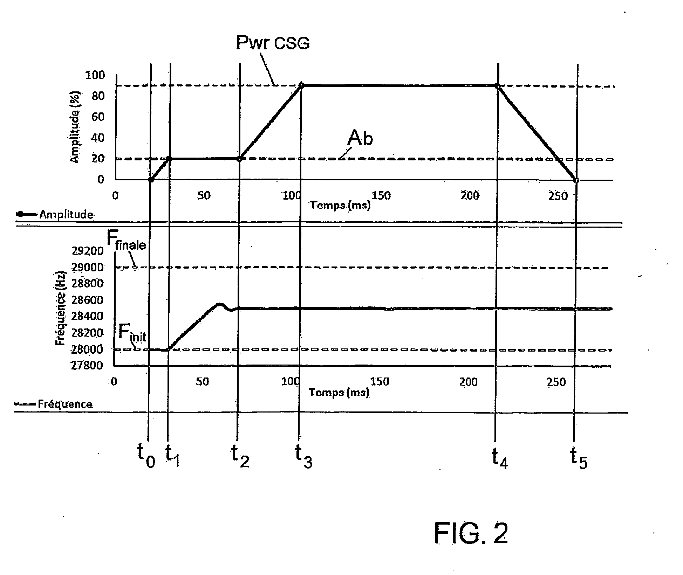

Au démarrage du système, le comportement de la fréquence et de l'amplitude du signal commande S est illustré à la figure 2.

### F3 : Fréquence modulée

Une variation de fréquence dF est appliquée sur une fréquence centrale Fc. La fréquence de modulation est déterminée par Fm.

$$F3 = f(Fc, dF, Fm)$$

| Argument | Description | Unité | Précision |
|---|---|---|---|
| **Fc** | Fréquence centrale supposée optimale | Hz | 2 |
| **dF** | Excursion en fréquence | Hz | 1 |
| **Fm** | Fréquence de modulation | Hz | 0,01 |

Prenons l'exemple de la fonction F3 suivante :

$$F3 = f(28000, 1000, 0.50)$$

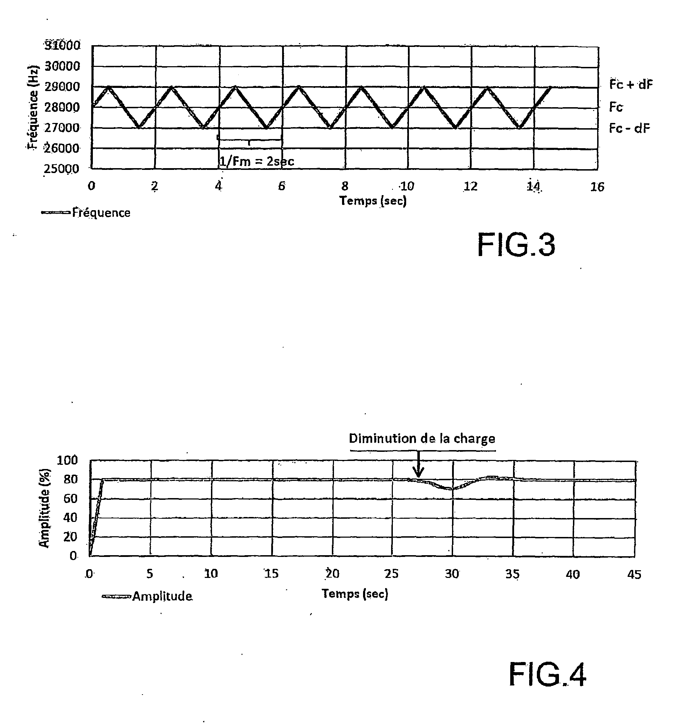

Au démarrage du système, le comportement de la fréquence est illustré sur la figure 3.

### F4 : Fréquence_aléatoire

Une séquence aléatoire de fréquence est autorisée selon une fonction aléatoire.

$$Fexc = Fc \pm k\Delta f$$

Le coefficient k est un coefficient aléatoire variant de 0 à 1. Le signe de la fonction sera également aléatoire.
La fonction F4 se notera donc :

$$F4 = f(Fc, \Delta f)$$

| Argument | Description | Unité | Précision |
|---|---|---|---|
| **Fc** | Fréquence centrale | Hz | 2 |
| $\Delta$**f** | Excursion maximale autour de la fréquence de consigne | Hz | 1 |

### Exemples de fonctions de commande élémentaires de la famille Amplitude (A)

### A1: Amplitude forcée

Une amplitude est imposée par l'utilisateur ; le générateur 10 applique automatiquement cette amplitude sans boucle de réaction.

$$A1 = f(Po)$$

| Argument | Description | Unité | Précision |
|---|---|---|---|
| Po | Amplitude imposée [0-100] | % | 1 |

A2 : Amplitude asservie en puissance

Une consigne de puissance est imposée par l'utilisateur. La mesure de courant I et de la tension V sur le transducteur permettent le calcul de la puissance effective fournie par le générateur. Cette puissance est comparée à la consigne pour maintenir la consigne stable quel que soit les perturbations à laquelle le transducteur peut être soumis.

$$A2 = f(Pcsg)$$

| Argument | Description | Unité | Précision |
|---|---|---|---|
| Pcsg | Puissance à asservir [0-100] | % | 1 |

Prenons l'exemple de la fonction A2 suivante :

$$A2 = f(80)$$

Au démarrage du système, le comportement de la puissance est illustré sur la figure 4.

Exemple de fonction de commande élémentaire de la famille Temps (T)

T1 : Fonction élémentaire TEMPS

La fonction T1 ne comporte aucun argument (valeur de réglage). Lorsque cette fonction T1 est utilisée dans une macro-fonction, le signal de commande S est généré pendant une durée indéterminée, jusqu'à ce que qu'une interruption externe de ce signal soit reçue par le générateur 10.

T2 : Durée de fonctionnement

Cette fonction élémentaire permet le réglage de la durée de fonctionnement de la génération du signal de commande S.

$$T2 = f(durée)$$

| Argument | Description | Unité | Précision |
|---|---|---|---|
| Durée | Durée de fonctionnement avant l'arrêt automatique | sec | 1 |

Une durée égale à zéro signifie une durée infinie. Dans ce cas, le dispositif 1 ne s'arrêtera qu'à partir d'une consigne ou commande externe.

Exemples de fonctions de commande élémentaires de la famille Cycle (C)

C1 : Fonction élémentaire CYCLE

La fonction F1 ne comporte aucun argument (valeur de réglage). Lorsque cette fonction C1 est utilisée dans une macro-fonction, le signal de commande S est non cyclique, c'est-à-dire est généré sans répétition d'un cycle.

C2: Rapport Cyclique (Ton/Ttotal)

A l'issu du temps de fonctionnement, un temps d'arrêt est déterminé par le rapport cyclique Ton/Ttotal.

$$C2 = f(RC)$$

| Argument | Description | Unité | Précision |
|----------|-------------|-------|-----------|
| **RC** | Rapport cyclique (Ton / Ttotal) | % | 1 |

Prenons l'exemple des fonctions associées suivantes :

$$F3 = f(28000, 1000, 0.50)$$

$$T2 = f(60)$$

$$C2 = f(30)$$

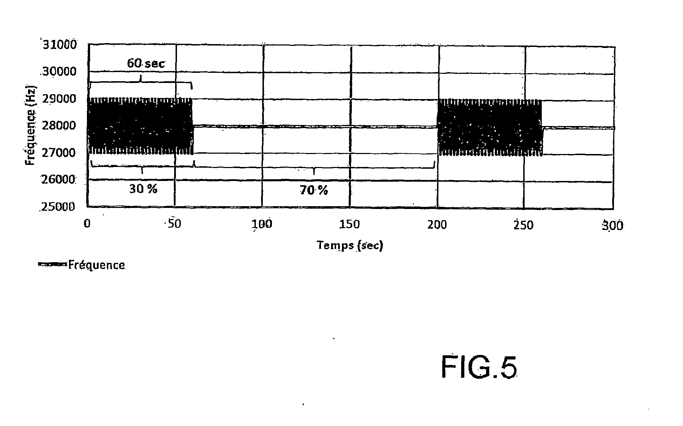

Le comportement de l'amplitude du signal S est illustré sur la figure 5.

Architecture et représentation d'une macro-fonction de commande

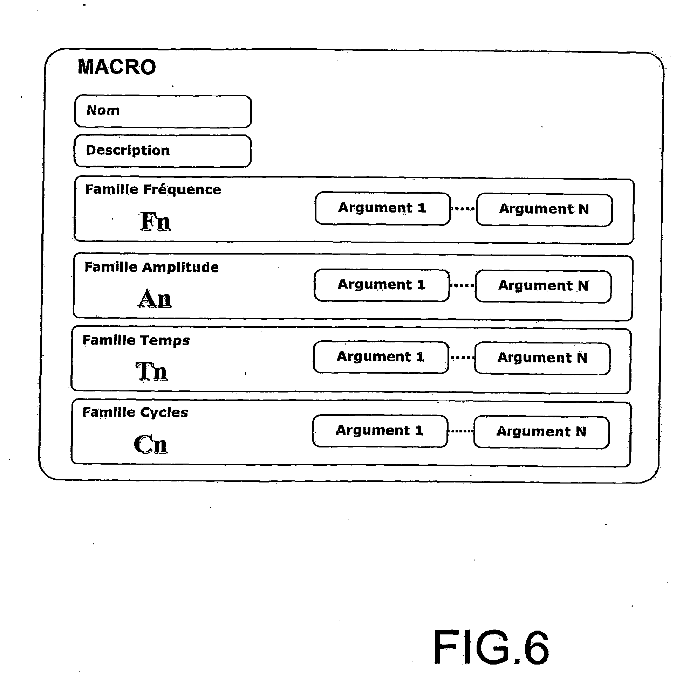

La figure 6 illustre un exemple d'architecture d'une macro-fonction de commande M, définie par l'association de différents paramètres :

Nom : il s'agit de l'identifiant de la macro-fonction et doit être unique et représentatif des fonctionnalités de la macro
Description : Ce champ n'est pas indispensable mais permet de donner une indication rapide et claire à l'utilisateur
Famille Fréquence : Identification de la fonction élémentaire Fn de la famille, parmi les fonctions propres à cette famille : F1, F2, F3, ...
Famille Amplitude : Identification de la fonction élémentaire An de la famille, parmi les fonctions propres à cette famille : A1, A2, A3, ...
Famille Temps : Identification de la fonction élémentaire Tn de la famille, parmi les fonctions propres à cette famille : T1,...
Famille Cycles : Identification de la fonction élémentaire Cn de la famille, parmi les fonctions propres à cette famille : C1, C2, C3, ...

Une macro-fonction de commande M peut ainsi s'écrire :

M = Fn(Arg1, Arg2,...) + An(Arg1, Arg2,...) + Tn(Arg1, Arg2,...) + Cn (Arg1, Arg2,...).

Exemple de macro-fonction de commande

Par exemple, dans un procédé industriel de nettoyage par ultrasons, l'utilisateur du dispositif 1 souhaite générer un train d'onde modulé à une amplitude fixe durant une durée précise et répéter cette opération régulièrement.
Lors de la création de la macro, il faudra donc affecter à cette macro un nom, une description, une fonction Fréquence, une fonction Amplitude, une fonction Temps et une fonction Cycle.

Typiquement, les paramètres de la macro seront les suivants :

| Paramètres | Valeurs |
|---|---|
| Nom | SWEEP |
| Description | Une variation de fréquence est autorisée selon un paramètre d'écart de fréquence (dF) par rapport à la fréquence centrale optimale. |
| Famille Fréquence | F3 : Fréquence modulée |
| Famille Amplitude | A1 : Amplitude forcée |
| Famille Temps | T2 : Durée de fonctionnement |
| Famille Cycle | C2 : Rapport cyclique (Ton / Ttotal) |

La macro est créée. Toutefois, elle est inutilisable en l'état. Il s'agit désormais de définir les arguments propres à chaque fonction :

| Fonctions | Arguments |
|---|---|
| F3 : Fréquence modulée | Fc : Fréquence centrale de fonctionnement |
| | dF : Variation de fréquence |
| | Fm : Fréquence de modulation |
| A1 : Amplitude forcée | Pcsg : Puissance de consigne |
| T2 : Durée de fonctionnement | Tcsg : Durée de fonctionnement |
| C2 : Rapport Cyclique | RC : Ton/Ttotal |

Nous obtenons donc une macro qui peut s'écrire :

$$SWEEP = F3(Fc, dF, Fm) \oplus A1(Pcsg) \oplus T2(Tcsg) \oplus C2(RC)$$

Nous souhaitons donc utiliser cette macro à une fréquence centrale de 30 kHz ($\pm$ 1000 Hz, modulée sur 2 Hz) avec une amplitude de 80 % et sur une durée de 10 minutes. Faire une pause, puis répéter l'opération toutes les quarante minutes.

La macro s'écrira donc :

$$SWEEP = F3(30000, 1000, 2) \oplus A1(80) \oplus T2(600) \oplus C2(25)$$

Avec:

**F3(30000, 1000, 2)** Correspondant à la fréquence modulée
**A1(80)** Correspondant à une amplitude de 80 %
**T2(600)** Correspondant à une durée de fonctionnement de 10 minutes
**C2(25)** Correspondant à un rapport cyclique de 25 % (pour obtenir 40 minutes)

Principe de configuration et d'utilisation des macro-fonctions de commande

Initialement, toutes les fonctions élémentaires de commande disponibles Fn, An, Tn, Cn sont conçues et chargées dans la mémoire morte 112 du dispositif électronique 1 par le fabricant du dispositif électronique 1. Ce chargement des fonctions élémentaires de commande en mémoire 112 peut être effectué au moyen d'un ordinateur 3 ou équivalent connecté au port de communication 110 b du dispositif 1 (figure 1)

Dans une variante préférée de mise en oeuvre, les macro-fonctions Mn de commande sont également conçues par le fabricant du dispositif électronique 1, et sont par exemple stockées sur un serveur dans une base de données de macro-fonctions.

A cet effet, le fabricant du dispositif électronique 1 utilise un programme informatique spécifique de construction de macro-fonctions de commande, qui est apte à être exécuté par des moyens électroniques de traitement, tel qu'un micro-ordinateur 3. Ce programme de construction de macro-fonctions de commande permet, lorsqu'il est exécuté, la construction par un utilisateur du programme, de macro-fonctions de commande (M) à partir des fonctions de commande élémentaires des familles de fonctions F, A, T, C précitées.

Afin d'adapter le fonctionnement du dispositif électronique de commande 1 à la charge 2 particulière liée à son application spécifique l'utilisateur du dispositif électronique 1 peut, au moyen d'un programme de paramétrage spécifique, qui est exécutable sur un micro-ordinateur 3 et qui lui a été fourni par le fabricant du dispositif 1 :

- accéder à la base de données de macro-fonctions de commande , soit en local, soit à distance via un réseau de télécommunication, de type internet, et
- configurer une ou plusieurs macro-fonctions de commande auxquelles il a accès. La configuration d'une macro-fonction de commande consiste à fixer la ou les valeurs de réglage des arguments ArgN propres à chaque fonction élémentaire de commande constituant la macro-fonction de commande.

Une fois l'étape de configuration achevée, chaque macro-fonctions de commande Mn, qui a été configurée, est stockée en local dans un fichier de sauvegarde, par exemple sur le disque dur du micro-ordinateur de l'utilisateur, en étant affectée à un dispositif électronique 1 donné. Le fichier de sauvegarde contient les fonctions élémentaires affectées à la macro ainsi que l'ensemble des arguments renseignés par l'utilisateur.

Ensuite, l'utilisateur connecte son micro-ordinateur au port de communication 110b du dispositif 1 et charge la ou les macro-fonctions de commande qui ont été configurées dans la mémoire morte 112 du dispositif 1. Lors de cette étape, les arguments ArgN des fonctions élémentaires ne sont pas transférés.

Plus particulièrement, il existe dans la mémoire morte 112 une zone dédiée aux macros, du type de celle présentée ci-après :

| @ | Désignation | Commentaires | Min | Max |
|---|---|---|---|---|
| 0x0514 | Nb Macros configurées | | 0 | 31 |
| 0x0515 | N° Macro active | 0 : Aucune macro active | 0 | 31 |
| 0x0516 | Macro 1 (Fn et An) | Bits 0 à 7 : N° fonction Fréquence | 1 | 255 |
| | | Bits 8 à 15 : N° fonction Amplitude | 1 | 255 |
| 0x0517 | Macro 1 (Tn et Cn) | Bits 0 à 7 : N° fonction Temps | 1 | 255 |
| | | Bits 8 à 15 : N° fonction Cycles | 1 | 255 |
| ... | | | | |
| 0x0552 | Macro 31 (Fn et An) | Bits 0 à 7 : N° fonction Fréquence | 1 | 255 |
| | | Bits 8 à 15 : N° fonction | 1 | 255 |
| | | Amplitude | | |
| 0x0553 | Macro 31 (Tn et Cn) | Bits 0 à 7 : N° fonction Temps | 1 | 255 |
| | | Bits 8 à 15 : N° fonction Cycles | 1 | 255 |

Le dispositif électronique 1 peut ainsi contenir en mémoire morte 112 une ou plusieurs macro-fonctions de commande configurées M1, M2,... Mn.

Ensuite pour faire fonctionner le dispositif électronique, plusieurs cas de figure peuvent se présenter.

Dans un premier mode de fonctionnement autonome, le micro-ordinateur 3 de l'utilisateur étant connecté au port de communication 110b, l'utilisateur visualise sur l'écran de son micro-ordinateur la ou les macro-fonctions de commande stockées en mémoire vive 111, active une seule macro-fonction M parmi l'ensemble des macro-fonctions disponibles et transfère dans la mémoire morte 112 du dispositif électronique 1 les arguments (Arg1, ...) des fonctions élémentaires de la macro-fonction de commande qui sont stockés dans le fichier de sauvegarde sur le disque dur du micro-ordinateur.

Prenons l'exemple de la macro suivante :

$$\text{SWEEP} = \text{F3}(28000, 1000, 0.50) \oplus \text{A1}(80) \oplus \text{T1}(600) \oplus \text{C2}(25)$$

Lors du transfert de la macro vers l'électronique, l'EEPROM 112 du périphérique disposera des informations suivantes :

| Nombre de macros utilisables | 1 | | | |
|---|---|---|---|---|
| Numéro de la macro active | 1 | | | |
| | | Fréquence | Amplitude | Temps | Cycle |
| MACRO 1 | 3 | 1 | 1 | 2 |
| MACRO 2 | 0 | 0 | 0 | 0 |
| ... | 0 | 0 | 0 | 0 |
| MACRO 31 | 0 | 0 | 0 | 0 |

Une fois une macro-fonction de commande M activée, le dispositif électronique de commande 1 peut fonctionner de manière autonome, le processeur 110 étant programmé pour piloter le pont en H 101 du générateur 10 à partir de la macro-fonction de commande M active.

Dans un autre mode de fonctionnement piloté, un automate programmable ou équivalent est connecté au port de communication 110b du dispositif électronique 1 et pilote automatiquement le dispositif 1 en activant automatiquement une macro-fonction de commande à la fois en fonction d'un programme exécuté par l'automate.

Dans les exemples de réalisation précités, les macro-fonctions sont construites à partir des quatre familles (F, A, T, C) de fonctions élémentaires de commande. Dans une autre variante de réalisation, notamment lorsque le transducteur ne génère pas un mouvement vibratoire, mais est utilisé par exemple pour commander le déplacement d'un organe ou pour générer un choc mécanique, la famille Fréquence F n'est pas indispensable, et les macro-fonctions peuvent être construites à partir des trois familles (A, T, C).

Dans le cadre de l'invention, les arguments $Arg_1$, $Arg_2$,..., d'une ou plusieurs fonctions de commande ne sont pas nécessairement des constantes dans le temps, mais peuvent également constituer des variables qui évoluent dans le temps en fonction d'une loi de commande programmée, pouvant notamment prendre en compte l'évolution du système qui est commandé par le dispositif électronique de commande.

Cette conception sous forme de macro-fonctions de commande constituées de fonctions élémentaires paramétrables permet à l'utilisateur du dispositif électronique 1 de facilement et rapidement développer et mettre au point une application donnée, en paramétrant le dispositif électronique 1 universel afin de l'adapter de manière spécifique au transducteur piézoélectrique, électrostrictif, ou magnétostrictif de l'application. Cette conception nouvelle permet également au fabricant du dispositif électronique 1 de facilement configurer et faire évoluer ce dispositif 1, en chargeant dans la mémoire 112, de nouvelles fonctions de commande élémentaires et/ou en modifiant les fonctions de commande élémentaires existantes.

## Revendications

**1.** Dispositif électronique (1) de commande d'applications mettant en oeuvre au moins un transducteur piézoélectrique, électrostrictif, ou magnétostrictif, ledit dispositif comportant un générateur électrique de puissance (10) adapté pour alimenter au moins un transducteur piézoélectrique, électrostrictif, ou magnétostrictif, avec un signal de commande (S), des moyens électroniques de commande (11) aptes à commander automatiquement le générateur électrique de puissance en utilisant une macro-fonction de commande (M), et une mémoire électronique (112) dans laquelle sont stockées :

- une première famille (A) de fonctions de commande comportant une ou plusieurs fonctions de commande élémentaires différentes (An), chaque fonction de commande élémentaire de la première famille (A) permettant d'ajuster l'amplitude du signal de commande (S),
- une deuxième famille (T) de fonctions de commande comportant une ou plusieurs fonctions de commande élémentaires différentes (Tn), chaque fonction de commande élémentaire de la deuxième famille (T) permettant d'ajuster la durée du signal de commande (S),
- une troisième famille (C) de fonctions de commande comportant plusieurs fonctions de commande élémentaires différentes (Cn), chaque fonction de commande élémentaire de la troisième famille (C) permettant d'ajuster le cycle du signal de commande (S),
- au moins ladite macro-fonction de commande (M), qui est constituée par l'assemblage d'au moins trois fonctions de commande élémentaires choisies respectivement parmi les trois familles de fonctions de commande (A, T, C) enregistrées en mémoire.

2. Dispositif selon la revendication 1, dans lequel la mémoire électronique (112) contient une quatrième famille (F) de fonctions de commande comportant une ou plusieurs fonctions de commande élémentaires différentes (Fn), chaque fonction de commande élémentaire de la quatrième famille (F) permettant d'ajuster la fréquence du signal de commande (S), et dans lequel ladite macro-fonction de commande (M) est constituée par l'assemblage d'au moins quatre fonctions de commande élémentaires choisies respectivement parmi les quatre familles de fonctions de commande (A, T, C, F) enregistrées en mémoire.

3. Dispositif selon l'une quelconque des revendications 1 ou 2, dans lequel au moins une fonction de commande élémentaire de ladite macro-fonction de commande (M) permet d'ajuster l'amplitude ou la durée ou le cycle ou la fréquence du signal de commande (S) en fonction d'au moins une valeur de réglage qui est stockée dans la mémoire électronique (112).

4. Dispositif selon l'une quelconque des revendications 1 à 3, dans lequel la mémoire électronique (112) contient plusieurs macro-fonctions de commande (Mn) différentes, qui sont chacune constituées par l'assemblage d'au moins trois fonctions de commande élémentaires choisies respectivement parmi les premières, deuxième et troisième familles de fonctions de commande (A, T, C) enregistrées en mémoire, et de préférence par l'assemblage d'au moins quatre fonctions de commande élémentaires choisies respectivement parmi les premières, deuxième, troisième, et quatrième familles de fonctions de commande (A, T, C, F) enregistrées en mémoire.

5. Dispositif selon la revendication 3, dans lequel la mémoire électronique (112) contient la ou les valeurs de réglage des fonctions de commande élémentaire d'une seule macro-fonction de commande (M).

6. Dispositif selon les revendications 3 et 4, dans lequel la mémoire électronique (112) contient la ou les valeurs de réglage des fonctions de commande élémentaire prédéfinies de chaque macro-fonction de commande (Mn) enregistrée dans la mémoire électronique (112).

7. Dispositif selon l'une quelconque des revendications précédentes, comportant au moins un port de communication (110b) permettant de faire communiquer le dispositif (1) avec une unité de traitement électronique programmable (3), de type microordinateur ou automate programmable.

8. Système de commande d'applications mettant en oeuvre au moins un transducteur piézoélectrique, électrostrictif, ou magnétostrictif , ledit système comportant un dispositif électronique (1) visé à l'une quelconque des revendications précédentes, et une unité de traitement électronique (3), qui est connectable audit dispositif électronique.

9. Système selon la revendication 8, dans lequel l'unité de traitement électronique (3) permet, lorsqu'elle est connectée au dispositif électronique (1), de charger en mémoire du dispositif électronique au moins une macro-fonction de commande (M).

10. Système selon l'une quelconque des revendications 8 ou 9, dans lequel l'unité de traitement électronique (3) permet, lorsqu'elle est connectée au dispositif électronique (1), de charger en mémoire (112) du dispositif électronique les fonctions élémentaires de chacune des familles de fonction ((A, F, T) ou (A, F, T, C)).

11. Système selon l'une quelconque des revendications 8 à 10, dans lequel l'unité de traitement électronique (3) permet, lorsqu'elle est connectée au dispositif électronique (1), de charger en mémoire (112) du dispositif électronique (1) la ou les valeurs de réglage d'au moins une macro-fonction de commande (M).

12. Système selon l'une quelconque des revendications 8 à 11, dans lequel l'unité de traitement électronique (3), lorsqu'elle est connectée au dispositif électronique (1), permet à un utilisateur de sélectionner une macro-fonction de commande parmi un ensemble de macro-fonctions de commande (Mn) enregistrées dans la mémoire du dispositif, le générateur électrique de puissance du dispositif (10) étant conçu pour exécuter ladite macro-fonction de commande qui a été sélectionnée.

13. Système selon l'une quelconque des revendications 8 à 12, dans lequel l'unité de traitement électronique (3) comporte en mémoire au moins toutes les fonctions élémentaires de commande enregistrées dans le dispositif électronique (1), et un programme de construction de macro-fonctions qui, lorsqu'il est exécuté par l'unité de traitement électronique, permet à un utilisateur de construire une macro-fonction de commande (M) à partir desdites fonctions de commande élémentaires.

14. Dispositif comportant un générateur électrique de puissance (10), des moyens électroniques de commande (11) aptes à commander automatiquement le générateur électrique de puissance, des moyens électroniques de traitement (3), et un programme informatique comprenant un moyen de code de programme informatique apte à être exécuté par les moyens électroniques de traitement (3), et permettant, lorsqu'il est exécuté par les moyens électroniques de traitement (3), la construction de macro-fonctions de commande (M) à partir d'une première famille (A) de fonctions de commande comportant une ou plusieurs fonctions de commande élémentaires différentes (An), qui permettent chacune d'ajuster l'amplitude d'un signal de commande (S) qui doit être généré par le générateur électrique de puissance (10), d'une deuxième famille (T) de fonctions de commande comportant une ou plusieurs fonctions de commande élémentaires différentes (Tn), qui permettent chacune d'ajuster la durée dudit signal de commande (S), et d'une troisième famille (C) de fonctions de commande comportant plusieurs fonctions de commande élémentaires différentes (Cn), qui permettent chacune d'ajuster le cycle dudit signal de commande (S)

15. Dispositif selon la revendication 14, le programme informatique permettant la construction de macro-fonctions de commande (M) à partir
également d'une quatrième famille (F) de fonctions de commande
comportant une ou plusieurs fonctions de commande élémentaires différentes (Fn), qui permettent chacune d'ajuster la fréquence dudit signal de commande (S).

16. Dispositif comportant un générateur électrique de puissance (10), des moyens électroniques de commande (11) aptes à commander automatiquement le générateur électrique de puissance, des moyens électroniques de traitement (3), et un programme informatique comprenant un moyen de code de programme informatique apte à être exécuté par des moyens électroniques de traitement (3), et permettant, lorsqu'il est exécuté par les moyens électroniques de traitement (3), le paramétrage d'une macro-fonction de commande (M), laquelle macro-fonction de commande (M) comprend une première fonction de commande élémentaire (An), qui permet d'ajuster, de préférence en fonction d'au moins une valeur de réglage, l'amplitude d'un signal de commande (S) qui doit être généré par le générateur électrique de puissance (10), d'une deuxième fonction de commande élémentaire (Tn), qui permet d'ajuster la durée dudit signal de commande (S), de préférence en fonction d'au moins une valeur de réglage, et une troisième fonction de commande élémentaire (Cn), qui permet d'ajuster le cycle du signal de commande (S), de préférence en fonction d'au moins une valeur de réglage, ledit programme permettant à un utilisateur de définir la ou les valeurs de réglage de la ou des fonctions élémentaires de commande.

17. Dispositif selon la revendication 16, le programme informatique permettant le paramétrage d'une macro-fonction de commande (M) comprenant également une quatrième fonction de commande élémentaire (Fn), qui permet d'ajuster la fréquence dudit signal de commande (S), de préférence en fonction d'au moins une valeur de réglage.


**Patentansprüche**

1. **Elektronische Steuervorrichtung** (1) zum Steuern von Anwendungen, bei denen zumindest ein piezoelektrischer, elektrostriktiver oder magnetostriktiver Wandler eingesetzt wird, wobei die Vorrichtung einen elektrischen Leistungsgenerator (10) aufweist, der dazu angepasst ist, zumindest einen piezoelektrischen, elektrostriktiven oder magnetostriktiven Wandler mit einem Steuersignal (S) zu versorgen, sowie elektronische Steuermittel (11), die dazu geeignet sind, den elektrischen Leistungsgenerator automatisch zu steuern, indem eine Steuerungs-Makrofunktion (M) verwendet wird, und einen elektronischen Speicher (112), in welchem abgelegt sind:

- eine erste Familie (A) von Steuerfunktionen, die eine oder mehrere verschiedene, elementare Steuerfunktionen (An) enthält, wobei jede elementare Steuerfunktion der ersten Familie (A) gestattet, die Amplitude des Steuersignals (S) anzupassen,
- eine zweite Familie (T) von Steuerfunktionen, die eine oder mehrere verschiedene, elementare Steuerfunktionen (Tn) enthält, wobei jede elementare Steuerfunktion der zweiten Familie (T) gestattet, die Zeitdauer des Steuersignals (S) anzupassen,
- eine dritte Familie (C) von Steuerfunktionen, die mehrere verschiedene, elementare Steuerfunktionen (Cn) enthält, wobei jede elementare Steuerfunktion der dritten Familie (C) gestattet, den Zyklus des Steuersignals (S) anzupassen,
- zumindest die Makro-Steuerfunktion (M), die aus der Zusammenfügung von zumindest drei elementaren Steuerfunktionen besteht, die aus den drei jeweiligen Steuerfunktions-Familien (A, T, C), die im Speicher abgespeichert sind, ausgewählt sind.

2. Vorrichtung nach Anspruch 1, wobei der elektronische Speicher (112) eine vierte Familie (F) von Steuerfunktionen enthält, die eine oder mehrere verschiedene, elementare Steuerfunktionen (Fn) enthält, wobei jede elementare Steuerfunktion der vierten Familie (F) gestattet, die Frequenz des Steuersignals (S) anzupassen, und wobei die Makro-Steuerfunktion (M) aus der Zusammenfügung von zumindest vier elementaren Steuerfunktionen besteht, die aus den vier jeweiligen Steuerfunktions-Familien (A, T, C, F), die im Speicher abgespeichert sind, ausgewählt sind.

3. Vorrichtung nach einem der Ansprüche 1 oder 2, wobei zumindest eine elementare Steuerfunktion der Makro-Steuerfunktion (M) gestattet, die Amplitude bzw. die Zeitdauer bzw. den Zyklus bzw. die Frequenz des Steuersignals (S) in Abhängigkeit von zumindest einem Einstellwert anzupassen (abzustimmen), der in dem elektronischen Speicher (112) abgelegt ist.

4. Vorrichtung nach einem der Ansprüche 1 bis 3, wobei der elektronische Speicher (112) mehrere verschiedene Makro-Steuerfunktionen (Mn) enthält, die jeweils aus der Zusammenfügung von zumindest drei elementaren Steuerfunktionen besteht, die aus der jeweiligen, ersten, zweiten und dritten Steuerfunktions-Familie (A, T, C), die im Speicher abgespeichert sind, ausgewählt sind, vorzugsweise aus der Zusammenfügung von zumindest vier elementaren Steuerfunktionen, ausgewählt aus der jeweiligen, ersten, zweiten, dritten und vierten Steuerfunktions-Familie (A, T, C, F), die im Speicher abgespeichert sind.

5. Vorrichtung nach Anspruch 3, wobei der elektronische Speicher (112) den bzw. die Einstellwerte der elementaren Steuerfunktionen einer einzigen Makro-Steuerfunktion (M) enthält.

6. Vorrichtung nach den Ansprüchen 3 und 4, wobei der elektronische Speicher (112) den bzw. die Einstellwerte der vorbestimmten elementaren Steuerfunktionen einer jeden Maltro-Steuerfunktion (Mn) enthält, die in dem elektronischen Speicher (112) abgespeichert ist.

7. Vorrichtung nach einem der vorangehenden Ansprüche, enthaltend zumindest einen Kommunikationsport (110b), über welchen die Vorrichtung (1) mit einer programmierbaren, elektronischen Verarbeitungseinheit (3) vom Typ Mikrocomputer oder programmierbarer Automat kommunizierfähig ist.

8. **System** zum Steuern von Anwendungen, bei denen zumindest ein piezoelektrischer, elektrostriktiver oder magnetostriktiver Wandler eingesetzt wird, wobei das System eine elektronische Vorrichtung (1) nach einem der vorangehenden Ansprüche aufweist, sowie eine elektronische Verarbeitungseinheit (3), die mit der elektronischen Vorrichtung verbindbar ist.

9. System nach Anspruch 8, wobei die elektronische Verarbeitungseinheit (3) dann, wenn sie mit der elektronischen Vorrichtung (1) verbunden ist, gestattet, zumindest eine Makro-Steuerfunktion (M) in den Speicher der elektronischen Vorrichtung zu laden.

10. System nach einem der Ansprüche 8 oder 9, wobei die elektronische Verarbeitungseinheit (3) dann, wenn sie mit der elektronischen Vorrichtung (1) verbunden ist, gestattet, die elementaren Funktionen einer jeden der Funktionsfamilien ((A, F, T) bzw. (A, F, T, C)) in den Speicher (112) der elektronischen Vorrichtung zu laden.

11. System nach einem der Ansprüche 8 bis 10, wobei die elektronische Verarbeitungseinheit (3) dann, wenn sie mit der elektronischen Vorrichtung (1) verbunden ist, gestattet, den bzw. die Einstellwerte von zumindest einer Makro-Steuerfunktion (M) in den Speicher (112) der elektronischen Vorrichtung (1) zu laden.

12. System nach einem der Ansprüche 8 bis 11, wobei die elektronische Verarbeitungseinheit (3) dann, wenn sie mit der elektronischen Vorrichtung (1) verbunden ist, einem Benutzer gestattet, eine Makro-Steuerfunktion aus einer Reihe von Makro-Steuerfunktionen (Mn) auszuwählen, die in dem Speicher der Vorrichtung abgespeichert sind, wobei der elektrische Leistungsgenerator der Vorrichtung (10) dazu ausgelegt ist, die Makro-Steuerfunktion auszuführen, die ausgewählt wurde.

13. System nach einem der Ansprüche 8 bis 12, wobei die elektronische Verarbeitungseinheit (3) zumindest sämtliche elementaren Steuerfunktionen im Speicher enthält, die in der elektronischen Vorrichtung (1) abgespeichert sind, sowie ein Programm zur Konstruktion der Makrofunktionen, das dann, wenn es von der elektronischen Verarbeitungseinheit ausgeführt wird, einem Benutzer gestattet, ausgehend von den elementaren Steuerfunktionen eine Makro-Steuerfunktion (M) zu konstruieren.

14. **Vorrichtung**, enthaltend einen elektrischen Leistungsgenerator (10), elektronische Steuermittel (11), die angepasst sind, den elektrischen Leistungsgenerator automatisch zu steuern, elektronische Verarbeitungsmittel (3) und ein Computerprogramm mit einem Computerprogramm-Codemittel, angepasst, von den elektronischen Verarbeitungsmitteln (3) ausgeführt zu werden und dann, wenn es von den elektronischen Verarbeitungsmitteln (3) ausgeführt wird, den Aufbau von Makro-Steuerfunktionen (M) ausgehend von einer ersten Familie (A) von Steuerfunktionen zu gestatten, die eine oder mehrere verschiedene, elementare Steuerfunktionen (An) enthält, die jeweils gestatten, die Amplitude eines Steuersignals (S) anzupassen, das von dem elektrischen Leistungsgenerator (10) erzeugt werden soll, sowie ausgehend von einer zweiten Familie (T) von Steuerfunktionen, die eine oder mehrere verschiedene, elementare Steuerfunktionen (Tn) enthält, die jeweils gestatten, die Zeitdauer des Steuersignals (S) anzupassen, und ausgehend von einer dritten Familie (C) von Steuerfunktionen, die mehrere verschiedene, elementare Steuerfunktionen (Cn) enthält, die jeweils gestatten, den Zyklus des Steuersignals (S) anzupassen.

15. Vorrichtung nach Anspruch 14, wobei das Computerprogramm den Aufbau von Makro-Steuerfunktionen (M), ausgehend auch von einer vierten Familie (F) von Steuerfunktionen gestattet, die eine oder mehrere verschiedene, elementare Steuerfunktionen (Fn) enthält, die jeweils die Frequenz des Steuersignals (S) anzupassen gestatten.

16. **Vorrichtung**, enthaltend einen elektrischen Leitungsgenerator (10), elektronische Steuermittel (11), die dazu angepasst sind, den elektrischen Leistungsgenerator automatisch zu steuern, elektronische Verarbeitungsmittel (3) und ein Computerprogramm mit einem Computerprogramm-Codemittel, das angepasst ist, von den elektronischen Verarbeitungsmitteln (3) ausgeführt zu werden und dann, wenn es von den elektronischen Verarbeitungsmitteln (3) ausgeführt wird, eine Parametrierung einer Makro-Steuerfunktion (M) zu gestatten, welche Makro-Steuerfunktion (M) eine erste elementare Steuerfunktion (An) enthält, die gestattet, vorzugsweise in Abhängigkeit von zumindest einem Einstellwert die Amplitude eines Steuersignals (S) zu verändern, das von dem elektrischen Leistungsgenerator (10) erzeugt werden soll, sowie eine zweite elementare Steuerfunktion (Tn), die gestattet, vorzugsweise in Abhängigkeit von zumindest einem Einstellwert die Zeitdauer des Steuersignals (S) zu verändern, und eine dritte elementare Steuerfunktionen (Cn), die gestattet, vorzugsweise in Abhängigkeit von zumindest einem Einstellwert den Zyklus des Steuersignals (S) zu verändern, wobei das Programm einem Benutzer gestattet, den bzw. die Einstellwerte der elementaren Steuerfunktion bzw. Steuerfunktionen zu definieren.

17. Vorrichtung nach Anspruch 16, wobei das Computerprogramm die Parametrierung einer Makro-Steuerfunktion (M) gestattet, welche auch eine vierte elementare Steuerfunktion (Fn) enthält, die gestattet, vorzugsweise in Abhängigkeit von zumindest einem Einstellwert die Frequenz des Steuersignals (S) einzustellen.

## Claims

1. An electronic device (1) for controlling locations using at least one piezoelectric, electrostrictive or magnetostrictive transducer, said device including an electric power generator (10) suitable for powering at least one piezoelectric, electrostrictive or magnetostrictive transducer, with a control signal (S), electronic control means (11) capable of automatically controlling the electric power generator by using a control macro-function (M), and an electronic memory (112) in which are recorded:

   - a first family (A) of control functions including one or more different elementary control functions (An), each elementary control function of the first family (A) making it possible to adjust the amplitude of the control signal (S),
   - a second family (T) of control functions including one or more different elementary control functions (Tn), each elementary control function of the second family (T) making it possible to adjust the duration of the control signal (S),
   - a third family (C) of control functions including several different elementary control functions (Cn), each elementary control function of the third family (C) making it possible to adjust the cycle of the control signal (S),
   - at least said control macro-function (M), which is made up of the assembly of at least three elementary control functions respectively chosen from among the three families of control functions (A, T, C) recorded in the memory.

2. The device according to claim 1, wherein the electronic memory (112) contains a fourth family (F) of control functions including one or more different elementary control functions (Fn), each elementary control function of the fourth family (F) making it possible to adjust the frequency of the control signal (S), and in which said control macro-function (M) is formed by the assembly of at least four elementary control functions respectively chosen from among the four families of control functions (A, T, C, F) recorded in the memory.

3.  The device according to one of claims 1 or 2, wherein at least one elementary control function of said control macro-function (M) makes it possible to adjust the amplitude or duration or cycle or frequency of the control signal (S) as a function of at least one adjustment value that is recorded in the electronic memory (112).

4.  The device according to any one of claims 1 to 3, wherein the electronic memory (112) contains several different control macro-functions (Mn), which are each made up of the assembly of at least three elementary control functions respectively chosen from among the first, second and third families of control functions (A, T, C) recorded in the memory, and preferably by the assembly of at least four elementary control functions respectively chosen from among the first, second, third and fourth families of control functions (A, T, C, F) recorded in the memory.

5.  The device according to claim 3, wherein the electronic memory (112) contains the adjustment value(s) of the elementary control functions of a single control macro-function (M).

6.  The device according to claims 3 and 4, wherein the electronic memory (112) contains the adjustment value(s) of the predefined elementary control functions of each control macro-function (Mn) recorded in the electronic memory (112).

7.  The device according to any one of the preceding claims, including at least one communication port (110b) making it possible to put the device (1) in communication with the programmable electronic processing unit (3), of the microcomputer or programmable logic controller type.

8.  A system for controlling applications implementing at least one piezoelectric, electrostrictive or magnetostrictive transducer, said system including an electronic device (1) according to any one of the preceding claims, and an electronic processing unit (3), which can be connected to said electronic device.

9.  The system according to claim 8, wherein the electronic processing unit (3) makes it possible, when it is connected to the electronic device (1), to load at least one control macro-function (M) into the memory of the electronic device.

10. The system according to any one of claims 8 or 9, wherein the electronic processing unit (3) makes it possible, when it is connected to the electronic device (1), to load the elementary functions of each of the function families ((A, F, T) or (A, F, T, C)) into the memory (112) of the electronic device.

11. The system according to any one of claims 8 to 10, wherein the electronic processing unit (3) makes it possible, when it is connected to the electronic device (1), to load the adjustment value(s) of at least one control macro-function (M) into the memory (112) of the electronic device (1).

12. The system according to any one of claims 8 to 11, wherein the electronic processing unit (3), when it is connected to the electronic device (1), allows a user to select a control macro-function from among a set of control macro-functions (Mn) recorded in the memory of the device, the electric power generator of the device (10) being designed to execute said selected control macro-function.

13. The system according to any one of claims 8 to 12, wherein the electronic processing unit (3) includes, in memory, at least all of the elementary control functions recorded in the electronic device (1), and a program for building macro-functions which, when executed by the electronic processing unit, allows a user to build a control macro-function (M) from said elementary control functions.

14. A device including an electric power generator (10), electronic control means (11) capable of automatically controlling the electric power generator, electronic processing means (3), and a computer program comprising computer program coding means that can be executed by the electronic processing means (3), and making it possible, when it is executed by the electronic processing means (3), to build control macro-functions (M) from a first family (A) of control functions including one or more different elementary control functions (An), which each make it possible to adjust the amplitude of a control signal (S) that must be generated by the electric power generator (10), a second family (T) of control functions including one or more different elementary control functions (Tn), which each make it possible to adjust the duration of said control signal (S), and a third family (C) of control functions including several different elementary control functions (Cn), which each make it possible to adjust the cycle of said control signal (S).

**15.** The device according to claim 14, the computer program making it possible to build control macro-functions (M) also from a fourth family (F) of control functions including one or more different elementary control functions (Fn), which each make it possible to adjust the frequency of said control signal (S).

**16.** A device including an electric power generator (10), electronic control means (11) capable of automatically controlling the electric power generator, electronic processing means (3), and a computer program comprising computer program coding means that can be executed by the electronic processing means (3), and making it possible, when it is executed by the electronic processing means (3), to configure a control macro-function (M), wherein said control macro-function (M) comprises a first elementary control function (An), which makes it possible to adjust the amplitude of a control signal (S) that must be generated by the electric power generator (10), the adjustment preferably being done as a function of at least one adjustment value, a second elementary control function (Tn), which makes it possible to adjust the duration of said control signal (S), preferably as a function of at least one adjustment value, and a third elementary control function (Cn), which makes it possible to adjust the cycle of the control signal (S), preferably as a function of at least one adjustment value, said program allowing a user to define the adjustment value(s) of the elementary control function(s).

**17.** The device according to claim 16, the computer program making it possible to configure a control macro-function (M) also comprising a fourth elementary control function (Fn), which makes it possible to adjust the frequency of said control signal (S), preferably as a function of at least one adjustment value.

FIG.1

FIG. 2

FIG.3

FIG.4

FIG.5

**MACRO**

> Nom
>
> Description
>
> **Famille Fréquence**
> **Fn**                   Argument 1 ┤----┤ Argument N
>
> **Famille Amplitude**
> **An**                   Argument 1 ┤----┤ Argument N
>
> **Famille Temps**
> **Tn**                   Argument 1 ┤----┤ Argument N
>
> **Famille Cycles**
> **Cn**                   Argument 1 ┤----┤ Argument N

# FIG.6

**EP 2 602 028 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5406503 A
- EP 1835622 A
- EP 1216760 A
- EP 1199047 A
- EP 1588671 A